# EUROPEAN PATENT SPECIFICATION

(11) **EP 2 928 197 B1**
(45) Date of publication and mention of the grant of the patent: **16.11.2016**
(21) Application number: 15161169.6
(22) Date of filing: 26.03.2015
(51) Int. Cl.: H04N 21/231, H04N 21/235, H04N 21/262, H04N 21/845, H04N 21/81

(54) **Method of video streaming, corresponding device and system**
VERFAHREN ZUM VIDEO-STREAMING, ZUGEHÖRIGE VORRICHTUNG UND SYSTEM
PROCÉDÉ DE DIFFUSION VIDÉO EN TEMPS RÉEL, DISPOSITIF CORRESPONDANT ET SYSTÈME

(30) Priority: 01.04.2014 EP 14305476
(43) Date of publication of application: 07.10.2015
(73) Proprietor: Thomson Licensing, 92130 Issy-les-Moulineaux (FR)
(72) Inventor: Straub, Gilles, 35576 CESSON SEVIGNE CEDEX (FR); Le Scouarnec, Nicolas, 35576 CESSON SEVIGNE CEDEX (FR); Neumann, Christoph, 35576 CESSON SEVIGNE CEDEX (FR); Onno, Stephane, 35576 CESSON SEVIGNE CEDEX (FR)
(74) Representative: Huchet, Anne

(56) References cited:
- US-A1- 2008 046 920
- US-A1- 2012 047 542
- US-A1- 2013 064 286
- US-A1- 2013 242 185
- "3rd Generation Partnership Project; Technical Specification Group Services and System Aspects; Transparent end-to-end Packet-switched Streaming Service (PSS); Progressive Download and Dynamic Adaptive Streaming over HTTP (3GP-DASH) (Release 12)", 3GPP STANDARD; 3GPP TS 26.247, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. V12.2.0, 6 March 2014 (2014-03-06), pages 1-118, XP050769689,

## Description

### 1. Technical Field

The disclosure relates to the field of cloud computing and in particular to the field of maintaining an optimal computation cost for providing video chunks in a targeted video environment that uses cloud computing.

### 2. Background Art

Insertion of advertisements into content broadcast to consumer devices has for a long time been a source of revenues for content and service providers. Streaming media files to consumer devices over a bidirectional data communication network has become commonplace, and on demand video streaming has been met with increasing success. TV on Demand (TVoD) or TV replay, Time Shift and Video on Demand (VoD) technologies enable transmission of content to individual users. This new content consumption model creates opportunities for generating revenues from so-called targeted advertisements. Targeted advertisements are advertisements that target a group of consumers or the individual consumer. The targeting is based on demographic information or on consumer profile. Advertisements are usually additional video sequences that are inserted at the beginning of a requested video, and additional advertisement videos may be inserted during viewing or at the end of the requested video. However, consumers tend to skip inserted advertisement breaks, which means revenue loss for the content provider. Solutions comprise blocking of video trick modes when an inserted advertisement is played out, making the inserted advertisement thus unskippable. This is not a satisfying solution, neither for the service provider, nor for the consumer. Therefore, alternative solutions have been developed that allow directly modifying the content itself, and instead of inserting advertisement breaks, the content video frames are modified to comprise the advertisements, thereby removing the need to insert unskippable advertisement breaks. Document WO 02/37828A2 with primary inventor McAlister describes replacing ad screening areas in video frames with targeted advertisements while streaming a video to a user. The advertisements are no longer concentrated in advertisement breaks, but are part of the video frames, and can therefore no longer be circumvented by the consumer. This technique that is known as overlaying requires including of ad screening areas in video frames. The ad screening areas are recognized when streaming the video content to a consumer, and targeted advertisements replace the ad screening areas. However, it is known that VoD servers cope with largely variable demands that depend on content popularity and time slot. The replacement operation, being executed during streaming, requires high computing power. In this operational context, the scalability of a solution where targeted advertisements replace ad screening areas during VoD streaming remains problematic.

There is thus a need to provide a scalable technical solution that ensures that targeted advertisements can be overlaid in pixel areas of video frames of video content while streaming the video to the user, in expected play out time and at minimal cost.

### 3. Summary.

The disclosed methods, device and system solve at least some of the drawbacks of discussed in the background section.

To this aim the present disclosure comprises in a first embodiment a method of video streaming. The method comprises a step of receiving, from a video player device, a request for streaming of a video to the video player device. In response to the request for streaming of a video, the device transmits to the video player device a video chunk list comprising resource locators of video chunks for playing the video. The video chunk list comprises a resource locator of a first resource locator type and a resource locator of a second resource locator type. The first resource locator type refers to a single video chunk and the second resource locator type comprises: a first resource locator referring to a first video chunk, a second resource locator referring to a second video chunk and an expected play out delay of the second video chunk. The method further comprises a step of receiving, from the video player device, a request for streaming a video chunk from the video chunk list. If a resource locator comprised in the request for streaming a video chunk is of the first resource locator type, the device transmits the single video chunk to the video player device. However if the resource locator comprised in the request for streaming a video chunk is of the second resource locator type, the device transmits to the video player device the first video chunk, and if the second video chunk is not available, the device transmits a request for computing the second video chunk, the request for computing the second video chunk comprising the expected play out delay.

According to a second embodiment of the method of video streaming, the request for computing the second video chunk is transmitted to a scheduler for scheduling a computing of video chunks. The scheduler comprises a plurality of job queues for computing video chunks, each job queue of the plurality of job queues is served by a computing instance of a particular category and each computing instance storing computed video chunks into cache memory. The scheduler attributes jobs for computing video chunks to a queue of a particular category selected according to the associated expected play out delay.

According to a third embodiment of the method of video streaming, upon reception of the request for computing, the scheduler verifies if a job corresponding to the reference to the second video chunk is expected to return a computed result within the expected play out delay. If not, the scheduler inserts a copy job of the job corresponding to the reference to the second video chunk in a queue of category urgent.

According to a fourth embodiment of the method of video streaming, upon reception of the request for computing, the scheduler verifies if a job corresponding to the reference to the second video chunk is expected to return a computed result within the expected play out delay. If not, the scheduler moves the job corresponding to the reference to the second video chunk in a queue of category urgent.

According to a fifth embodiment of the method of video streaming, the method further comprises adding or removing of computing instances serving each queue as a function of queue size. This fifth embodiment can be combined with any of the second to the fourth embodiments to provide a particular advantageous embodiment.

According to a sixth embodiment of the method of video streaming, a job queue category comprises at least a best effort queue and an urgent queue. This sixth embodiment can be combined with any of the second to the fifth alternative embodiments to provide a particular advantageous embodiment.

According to a seventh embodiment of the method of video streaming, the computing comprises overlaying of a pixel zone in image frames of a video chunk with content that is targeted to a user of the video player device. This seventh embodiment can be combined with any of the previous embodiments to provide a particular advantageous embodiment.

The present disclosure also relates to a device. The disclosed device comprises a processor, a transmitter and a receiver. The receiver is configured to receive, from a video player device, a request for streaming of a video to the video player device. The transmitter is configured to transmit, to the video player device, in response to the request for streaming of a video, a video chunk list comprising resource locators of video chunks of the requested video. The video chunk list comprises a resource locator of a first resource locator type and a resource locator of a second resource locator type. The first resource locator type referring to a single video chunk. The second resource locator type comprising: a first resource locator referring to a first video chunk, a second resource locator referring to a second video chunk and an expected play out delay of the second video chunk. The receiver is further configured to receive, from the video player device, a request for streaming of a video chunk from the video chunk list. The processor is configured to determine if a resource locator comprised in the request for streaming a video chunk is of the first resource locator type, and the transmitter is further configured to transmit, to the video player device, the single video chunk if the resource locator comprised in the request for streaming a video chunk is of the first resource locator type. The processor is further configured to determine if a resource locator comprised in the request for streaming a video chunk is of the second resource locator type. The transmitter is further configured to transmit the first video chunk to the video player device if the resource locator comprised in the request for streaming a video chunk is of the second resource locator type, and the processor is further configured to determine if the second video chunk is not available. The transmitter is further configured to transmit, if the second video chunk is not available, a request for computing of the second video chunk, the request for computing of the second video chunk comprising the reference to the second video chunk and the expected play out delay.

The present disclosure also comprises a system comprising the above device. The system further comprises a scheduler configured to schedule a computing of video chunks on computing instances and a cache memory configured to store computed video chunks. The transmitter of the device is further configured to transmit the request for computing the second video chunk to the scheduler. The scheduler uses a memory for storing a plurality of job queues for computing video chunks, each job queue of the plurality of job queues being served by a computing instance of a particular category, each computing instance storing computed video chunks available into the cache memory, and the scheduler attributes jobs for computing video chunks to a queue of a particular category selected according to the associated expected play out delay.

According to a variant embodiment of the system, the scheduler is further configured to verify, upon reception of the request for computing, if a job corresponding to the reference to the second video chunk is expected to return a computed result within the expected play out delay, and if not, to insert a copy job of the job corresponding to the reference to the second video chunk in a queue of category urgent.

According to a variant embodiment of the system, the scheduler is further configured to verify, upon reception of the request for computing, if a job corresponding to the reference to the second video chunk is expected to return a computed result within the expected play out delay, and if not, to move the job corresponding to the reference to the second video chunk in a queue of category urgent.

According to a variant embodiment of the system, the scheduler is further configured to add or to remove computing instances serving each job queue as a function of job queue size.

The present disclosure also comprises a computer program product downloadable from a communication network and/or recorded on a medium readable by computer and/or executable by a processor, comprising program code instructions for implementing the steps of the method according to any of the first to the seventh embodiments.

The present disclosure also comprises a non-transitory computer-readable medium comprising a computer program product recorded thereon and capable of being run by a processor, including program code instructions for implementing the steps of the method according to any of the first to the seventh embodiments.

### 4. List of figures.

Other characteristics and advantages of embodiments of the present disclosure will appear when reading the following description and the annexed drawings.
Figure 1 illustrates the process of targeted content overlaying;
Figure 2 illustrates video preprocessing for determining targetable video chunks;
Figure 3 illustrates manifest file generation and use.
Figure 4 illustrates the use of cloud computing means for providing video streams comprising targeted advertisements as overlays in pixel regions of image frames of video chunks using Amazon AWS;
Figure 5 schematically illustrates an example cloud computing environment for targeted video chunk computing;
Figure 6 illustrates interrelations between a play time tracker and other modules according to an embodiment of the present invention.
Figure 7 is a flow chart illustrating a particular embodiment of a method according to the invention.
Figure 8 is an example device for implementing an embodiment of the method of the present invention.

### Detailed description.

The ensuing description provides exemplary embodiments. These embodiments are not intended to limit the scope, applicability or configuration of the disclosure, but rather provide the skilled in the art with an enabling description for implementing the embodiments. It is understood that various changes may be made in the function and the arrangement of the exemplary preferred embodiments while remaining within the scope of the present disclosure.

In the ensuing description, the term 'overlaying' expresses the action of overlaying content over the original content in a video frame. This results in a video frame where at least some of the pixels as originally comprised in the video frame are replaced by the pixels of the overlay image. Features such as transparency, color setting and contrast may be used to adapt the overlay image to the original video frame contents.

In the ensuing description, a series of consecutive image frames of video content is referred to as a 'video chunk'. A series of consecutive image frames of video content that comprise overlayable pixel zones for overlaying with targeted advertisements, is referred to as a **'targetable** video chunk'. A series of consecutive image frames in which targeted content is overlaid, is referred to as a **'targeted** video chunk'. During streaming of video content to a consumer device, the video content is adapted to a particular user by overlaying advertisements that are targeted to the particular consumer in the determined targetable video chunks, and the thus obtained targeted video chunks are streamed to the consumer as part of the video content.

In the ensuing description, the term computing is used to designate processing operations for obtaining a targeted video chunk from a targetable video chunk.

In the ensuing description, the term play out delay is used to designate a delay counted from a given moment in time, e.g. counted from a given video chunk, within which it is expected to need another video chunk for play out by a video player. Alternatively, the expected play out 'delay' is rather an expected play out 'time', that corresponds for example to a time of a reference clock such as NTP (Network Time Protocol), a common time reference shared between multiple devices, or wall clock time of a future time or clock reference, when it is expected to need another video chunk for play out by a video player.

In principle, cloud computing can offer required scalability as it allows for potentially unlimited on-demand computing resources. With cloud computing platforms such as offered by Amazon AWS, pricing of computing instances is dependent on computing speed and on the guarantee to have a computing result ready at a given moment in time. Ideally, the computing of targeted video chunks can be dispatched over various types of computing instances offered by the cloud computing platform, in a way that optimizes computing cost. For example, for a targetable video chunk that is near to the beginning of an on-demand video, a relatively high cost, relatively high speed cloud computing instance is required; while for a targetable video chunk that is at twenty minutes from the beginning, a relatively low cost, relatively low speed cloud computing instance is sufficient. However, as will be explained, several considerations perturb this ideal scenario:
(i) A consumer does not forcibly watch an on-demand video in a linear manner, as he/she may use trick modes. Then, according to the consumer's trick mode actions, video chunks may thus be needed sooner or later than expected for play out.
(ii) The pricing of cloud computing instances is not stable as it is determined through bidding.
(iii) Relatively low price cloud computing instances (e.g. Amazon 'spot') are not guaranteed to give a result within a given delay.
(iv) even standard cloud computing instances may fail prior to job completion.

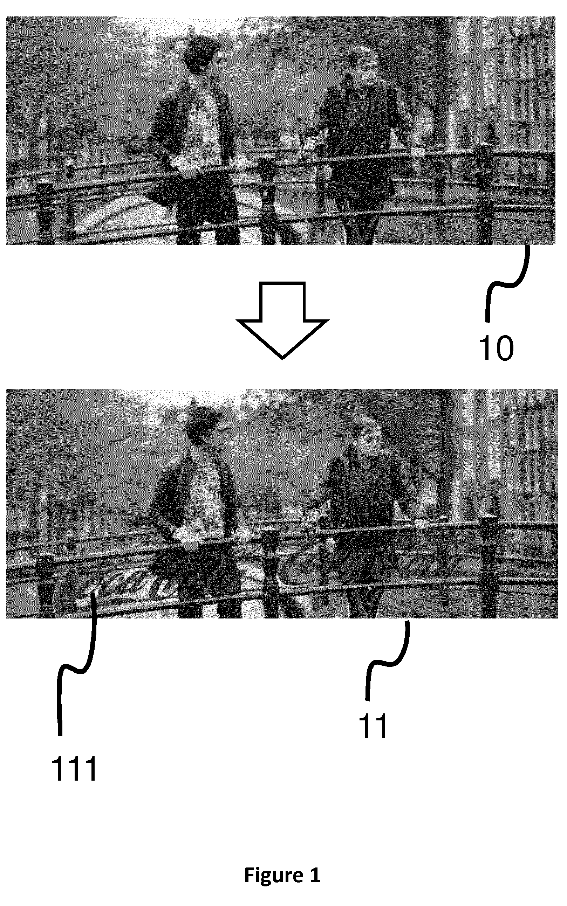

**Figure 1** illustrates a process of targeted content overlaying in a streamed video content. Image frame 10 represents an original image frame of unaltered video. Image frame 11 represents an altered video image frame, in which a targeted content 111 is overlaid, here in the bridge railing.

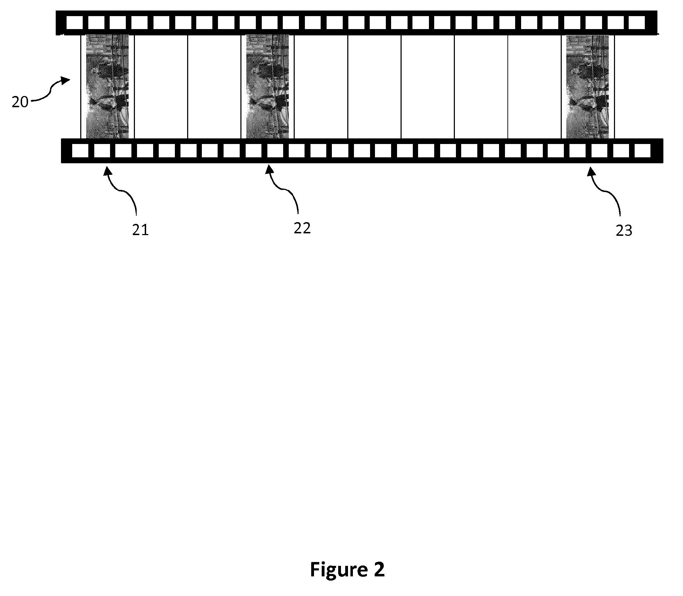

**Figure 2** illustrates video preprocessing for determining targetable video chunks. Item 20 represents a video sequence. Items 21, 22 and 23 represent video image frames, determined during the video preprocessing, that comprise pixel regions where targeted content can be overlaid. Different techniques can be employed to recognize these pixel regions, for example through detection of pixel areas in consecutive frames that are relatively stable in terms of changes.

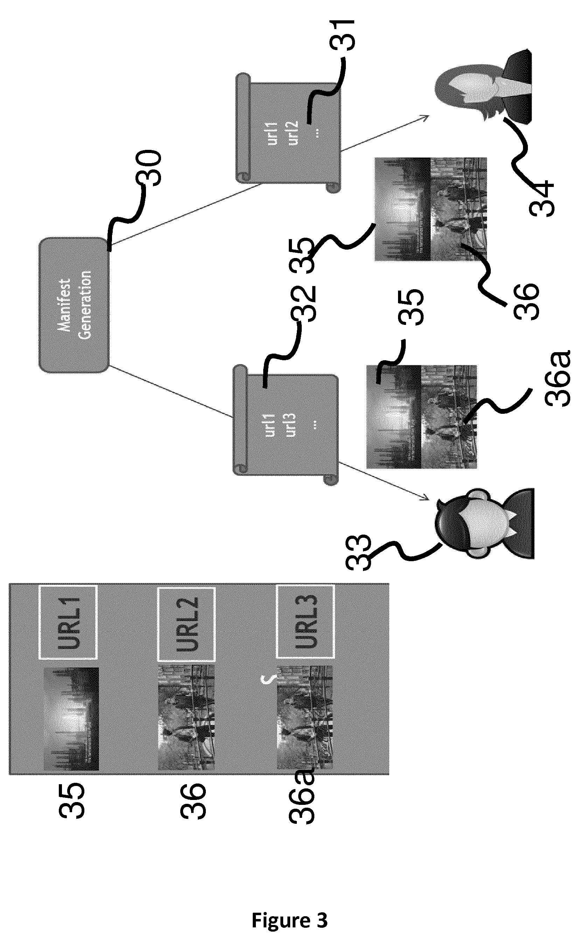

**Figure 3** illustrates manifest file generation and use in accordance with one or more embodiments of the invention. According to the scenario used for this example, there are two consumers 33 and 34. When these consumers request a video, each receives a manifest file. Consumer 33 receives manifest file 32. Consumer 34 receives manifest file 31. The manifest files are generated by manifest generation function 30. The manifest file comprises URLs that point to video chunks of the requested video. The manifest file is thus a list of video chunks part of a given video content. For consumer 33, the manifest file comprises a URL1 that points to generic video chunk 35, that is the same for all consumers, and a URL3, that is specifically targeted to consumer 33, as points to a targeted video chunk 36a that comprises an advertisement overlaid over the pixel region corresponding to the bridge railing appearing on the images of the video chunk. Consumer 34 receives a manifest file comprising URL1 and URL2. URL1 is the same as for consumer 33. URL2 points to generic video chunk36, which is the same for consumers 33 and 34. A video player in each of the consumer devices (not shown) of the consumers will read the manifest file and fetch the referenced URLs in order to receive and play the video chunks.

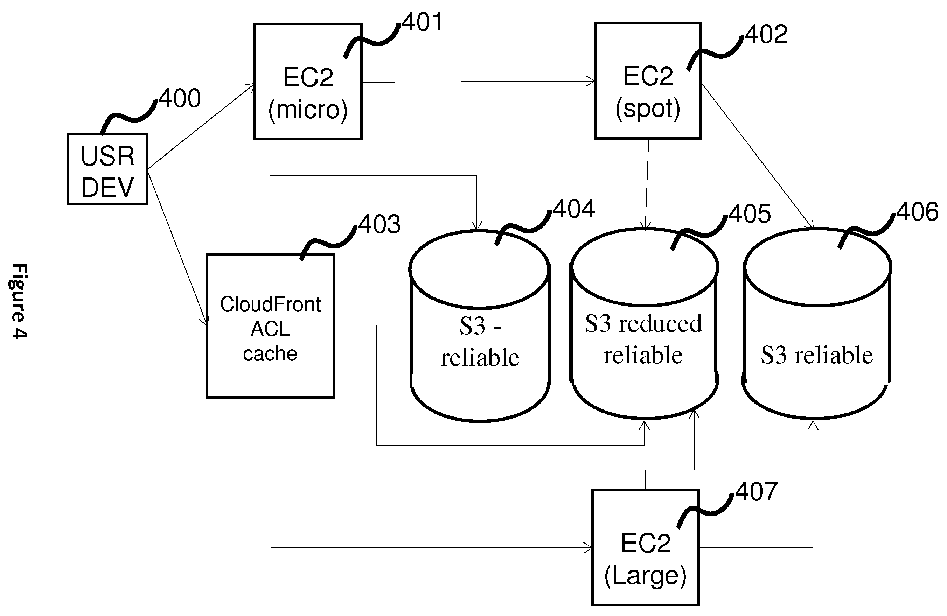

**Figure 4** illustrates the use of cloud computing means for providing video streams that comprise targeted advertisements as overlays in pixel regions of image frames of video chunks using Amazon AWS, in which one or more embodiments of the invention may be implemented.
- Computing instances such as "EC2" (Elastic Compute Cloud; EC2 micro 401, EC2 spot 402, EC2 Large 407) run computational tasks (such as targeting, overlaying, user profiling, manifest file generation). EC2 is a web service that provides sizeable computation capacity and offers a virtual computing environment for different kinds of operating systems and for different kinds of "instance" configurations. Typical instance configurations are "EC2 standard" or "EC2 micro". The "EC2 micro" instance is well suited for lower throughput applications and web sites that require additional compute cycles periodically. There are different ways of getting resources in AWS. The first way, referred as "on demand" provides the guarantee that resources will be made available at a given price. The second mode, referred as "spot' allows getting resources at a cheaper price but with no guarantee of availability. "EC2 Spot" instances allow obtaining a price for EC2 computing capacity by a bidding mechanism. These instances can significantly lower computing costs for time-flexible, interruption-tolerant tasks. Prices are often significantly less than on-demand prices for the same EC2 instance types.
- Storage instances such as "S3" (Simple Storage Service; 404, 405, 406) store data such as generic and targetable video chunks. "S3" provides a simple web services interface that can be used to store and retrieve any amount of data any time. Storage space price depends on the reliability that is wished, for example standard storage with high reliability and reduced redundancy storage for storing non-critical, reproducible data.
- "CloudFront" (403) proposes data delivery. Cloud Front is a web service for content delivery and integrates with other AWS services to distribute content to end users with low latency and high data transfer speeds and can be used for streaming of content.

In the figure, element 400 depicts a user device, such as a Set Top Box, PC, tablet, or mobile phone. Reliable S3 404 is used for storing of generic and targetable video chunks. Reduced reliable S3 (405) is used for storing targeted video chunks that can easily be recomputed. Reduced reliable S3 (405) is used as a cache, in order to keep targeted video chunks for some time in memory. Reliable S3 406 is used for storing: targetable video chunks, advertisements or overlay content. EC2 spot instances 402 are used to pre-compute targeted video chunks. This computation by the EC2 spot instances, which can be referred to as 'batch' computing, is for example triggered upon the manifest generation. On-demand EC2 Large instances (407) is used to realize 'on the fly' or 'real-time' overlaying. Computing of a targeted video chunk is done as follows: a targetable video chunk is retrieved from S3 reliable (406), the targetable video chunk is decoded, an overlay content is chosen (e.g. an advertisement, chosen as a function of user preferences), overlaid over pixel regions of image frames of the targetable video chunks, and the image frames are re-encoded, thus obtaining a targeted video chunk. Depending on previously mentioned 'on the fly' or 'batch' computing of the targeted video chunk, the decoding of the targetable video chunk, choosing of overlay content, the overlaying and the re-encoding is either done in respectively an EC2 spot instance (402) or in an EC2 large instance (407). Of course, this described variant is only one of several strategies that are possible. Other strategies may comprise using different EC2 instances (micro, medium or large for example) for either one of 'on the fly' or 'batch' computing depending on different parameters such as delay, task size and computing instance costs, such that the use of these instances is optimized to offer a cost-effective solution with a good quality of service. The targeted video chunk is then either stored in reduced reliable S3 (405) that is used as a cache in case of 'batch' computing, or directly served from EC2 large 407 and optionally stored in reduced reliable S3 405 in case of 'on the fly' computing. Batch computing of targeted video chunks is preferable for reasons of computing cost if time is available to do so. Therefore a good moment to start batch computing of targeted video chunks is when the manifest is generated. However if a user fast forwards to a targetable video chunk that has not been computed yet, more costly 'on the fly' computing is required.

Thus, depending on the targetable video chunk location on the video play timeline, the cloud computing instances are to be chosen according to a strategy that optimizes cost. The strategy can be decided upon when the manifest file is generated. However, the computing strategy must be revisited if the user uses trick modes such as fast forward. If computing of a targeted video chunk was started on a spot instance, there is no guarantee that the targeted video chunk will be available on time if the user fast forwards the video. Consequently, there is a need to revisit the computing strategy some time before video chunk play-out to ensure video chunk availability in case of unexpected events. A possible solution would be to track user play-time in the VoD server. But this would require monitoring of play time for every VoD user. Such a solution would compromise scalability. And, generally, cloud based solutions require stateless design so as to ease load balancing between cloud servers. It would thus be desirable to provide a stateless solution that would allow revisiting video chunk computing strategy sufficiently in advance so as to be able to provide chunks in expected play out time. Embodiments of the present invention provide a method and device for play time tracking for video chunk delivery.

When a user requests a given video, a decision is taken for the targetable video chunks in the video to overlay these with content targeted to the particular user according to the user profile. A manifest file is generated and transmitted to the user. For every targeted video chunk of the video that is not already available in cache area, a job to compute the targeted video chunk is generated and posted to a job queue. A job can be considered as being a "targeted chunk computation request". Each job comprises an expected play out time parameter or expected play out delay parameter that specifies the delay or time limit that may be used to compute the targeted video chunk. The expected play out time is the expected time when the targeted video chunk is supposed to be needed by the video player given the actual play position and play speed. The expected play out time may comprise an additional margin delay to take into account storage and transmission delay for transmitting the targeted video chunk to a video player from storage. The different types of cloud instances are characterized by parameters such as computing speed and cost per time unit. The computing speed can be expressed as a ratio to real-time video play out speed, e.g. 1 means that computing duration is equal to video chunk play out duration, 2 means that the computing duration is twice the play out duration, etc. Of course, this depends on the instance characteristics, e.g. for AWS EC2, the number of ECUs (EC2 Compute Units). Different job queues are defined according to different characteristics of cloud computing instances in terms of computing speed and reliability.

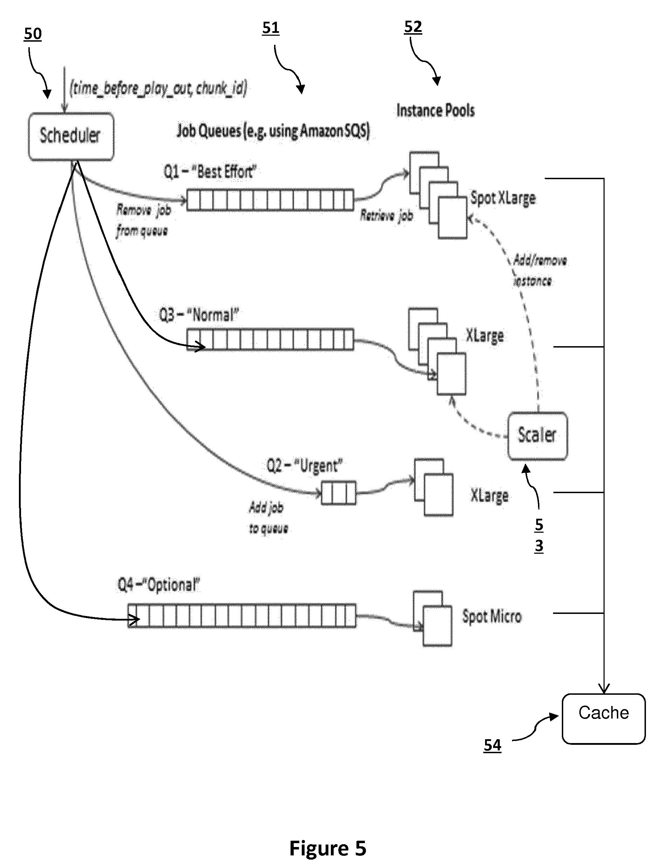

**Figure 5** schematically illustrates an example cloud computing environment for targeted video chunk computing. Depicted are: a scheduler 50, job queues 51, instance pools 52, scaler 53, and cache 54. A job in a queue comprises associated information related to the video chunk identifier of a targeted video chunk and the expected play out time of the video chunk. The scheduler receives requests for computing targeted video chunks and generates jobs. The scheduler decides in which queue to place a job according to the expected play out time. The instance pools are fed with jobs from queues, for example in a FIFO order (First In, First Out). If the targeted video chunk for a job in a queue already exists in the cache (i.e. the targeted video chunk is said to be 'available'), the job is removed from the queue and the next job is fetched. If it is not yet in the cache, the job is started. When video chunks have been computed, they are stored in the cache (i.e. the result of the computing, that is the targeted video chunk, is stored in a memory area; cache is an example of a memory area, other examples of memory areas are a data base, a volatile or non-volatile memory, external or internal storage). Computed video chunks are delivered from the cache to video players on consumer devices (not shown). In the example embodiment of figure 5, four types of queues are shown: a "best effort" queue Q1, an "urgent" queue Q2 for urgent jobs, a "normal" queue for "normal" jobs, and an "optional" queue Q4 for "optional" jobs. The jobs in each particular queue are attributed to particular instance pools; a "Spot Xlarge" instance pool for "best effort" queue Q1, an "XLarge" instance pool for "urgent" queue Q2, an "Xlarge" instance pool for queue "normal" Q3, and a "Spot Micro" instance pool for "optional" queue Q4. Scaler 53 adds or removes instances from the "Spot XLarge" and "XLarge" instance pools according to the job flows in the queues Q1 and Q3. There may be several scaling strategies for starting/stopping a particular instance of a given pool serving a particular queue. There is a unique scaling strategy for a given queue. The scaling strategy decides when a new instance shall be started from an instance pool, for example by determining the number of jobs present in the queue, or by determining the status of current instances in the instance pool. The scaling strategy also decides when a given instance is to be stopped, and is to be removed from the instance pool. For a given queue there are two extreme cases:
(i) If the strategy is to optimize cost, it is tried to avoid having instances in idle state (i.e. not being used for computing a targeted video chunk); assuming instances are charged per hour, the strategy is then to wait for the queue to be relatively filled before starting a new instance. In that extreme case, the latency for computing a video chunk will be relatively high.
(ii) In the other extreme case, the strategy is to minimize the latency and it is tried to have a smallest queue as possible, taking the risk that some instances may be at some point not computing chunks (when the queue is empty; i.e. these instances are said to be "idle").

Starting and stopping of instances is done on observing the number of jobs within a queue, the number of currently running instances and their type. A queue is therefore defined by the characteristics of the instance pool serving it and its scaling strategy. Spot instances differ from other instances in that there is no guarantee that an instance will be granted; however, if granted, its price will be relatively low when compared to other types of instances. A spot instance may be shut down any time, even after having been granted; if it shuts down within one hour, it is not charged. Scheduler 50 receives the requests for the targeted video chunks (i.e. a "job"), and for each request it receives an identifier of a video chunk and a time before play out. The scheduler attributes the jobs to the right queue according to the expected play out time. If the expected play out time is above a threshold, the job can be posted to best-effort queue Q1. The instances from instance pools 52 fetch jobs from their attributed queue and run them. However, as spot instances may be killed at any time, and possibly before they have the time to commit their job result, there is a need for a mechanism that identify non-processed jobs and that recreates them if needed. If the expected play out time of a job is below the threshold, the scheduler attributes the job to the normal queue Q3 or to the urgent queue, again depending on the time before play out. According to a variant embodiment in its simplest form, there are only two queues, one for "slow" and one for "fast" jobs. For the more general case, any number of queues more than one is supported. According to a variant embodiment, a priority queue is defined, in which jobs are ordered on expected play out time for example. The role of the scaler is to keep the length of the queues under a threshold value by starting and stopping of instances within a pool. When a queue is large and growing, the scaler adds instances. When the queue is small and shrinking, instances can be stopped. The scaler ensures that there are enough free fast instances for processing jobs of the urgent queue Q2. Any video chunk that cannot be processed before it is due for play out can be simply dropped, and consequently no targeted video chunk will be provided in that case.

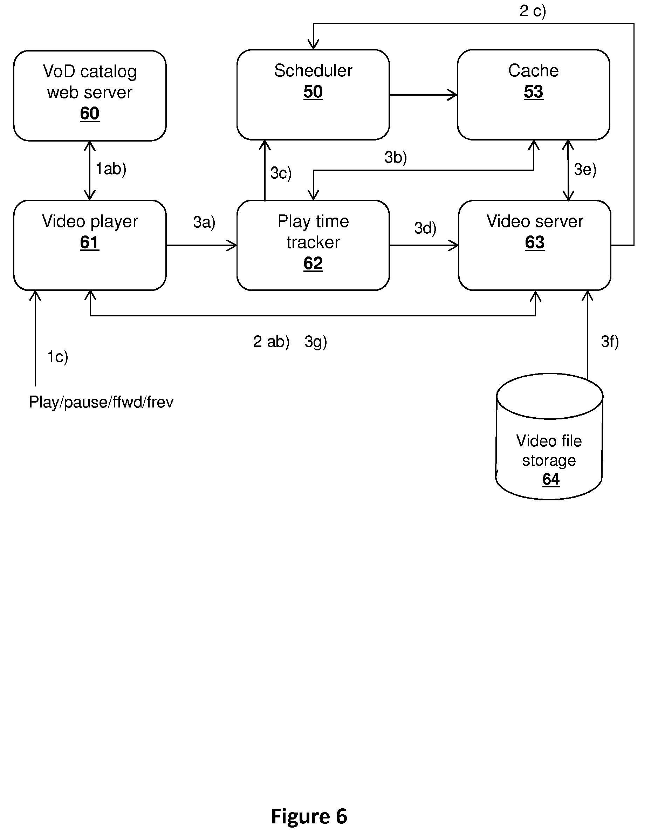

**Figure 6** illustrates interrelations between a play time tracker and other modules according to an embodiment of the present invention. The figure illustrates: a VoD catalog web server 60, a scheduler 50, a cache 53, a video player 61, a play time tracker 62, a video server 63, and video file storage 64.

Once the scheduler 50 has posted a job in the appropriate queue, a certain number of events may occur between the posting of the job and the moment the related targeted video chunk is needed:
- If the job is in a queue served by a spot instance, there is no guarantee that an instance will be allocated in expected play out time to compute the chunk;
- An instance currently executing a job (i.e. computing a chunk) may fail prior completion of the task, and no video chunk will be computed;
- If the user executes a trick mode, the expected play out time may change, so that the job queue attribution is no longer appropriate.

Consequently, the decisions taken by the scheduler for placement of jobs in the different queues are regularly revisited in order to maximize the probability that a requested targeted video chunk is available at the right time and is computed with the lowest possible cost. To achieve this objective with a stateless solution, parameters are inserted in video chunk URLs that allow play time tracking. For example, in a manifest file transmitted to a video player, on every 10 or 20 video chunks a URL for a video chunk is 'overloaded' with additional information, such as an identifier of a video chunk that is expected to be requested soon, and with what play out time or delay. An example manifest file looks like this:
#manifest file for video "m"
http://server/m/chunk0.ts
http://server/m/chunk1.ts
http://server/m/chunk2.ts
http://pttracker/?chunk=m/chunk6.ts&duein=20&dest=http ://server/m/chunk3.ts
http://server/m/chunk4.ts
http://server/m/chunk5.ts
http://server/m/chunk6.ts

The following actions apply to the arrows between the functional components in the figure:
**1a:** Consumer searches for content in VoD catalog;
**1b:** Video player 61 obtains URL to chosen content;
**1c:** Consumer presses play;
**2a:** Video player 61 requests content from video server 63;
**2c:** Video server 63 requests scheduler 50 to schedule jobs for providing targeted video chunks of requested content;
**3a:** Video player 61 requests URL from manifest file;
**3b:** Play time tracker 62 verifies availability of video chunk6 in cache 53;
**3c:** Play time tracker 62, video chunk6 not in cache 53, requests scheduler 50 to launch urgent job for video chunk6;
**3d:** Play time tracker 62 forwards request for video chunk3 to video server 63;
**3e:** Video server 63 fetches video chunk from cache 53;
**3f:** Video server 63 fetches video chunk from video file storage 64;
**3g:** Video server 63 provides video chunk3 to video player 61.

The consumer, operating video player 61, chooses a video content from VoD catalog web server 60 (action 1a). Once the consumer has chosen a video (e.g. video "m"), the video player obtains a URL to the content (action 1b) and the consumer starts playing the video by issuing a play command using the obtained URL (action 1c). The play command is transmitted to the video server 63 (action 2a). In response, the video server transmits a manifest file or video chunk list to the video player (e.g. the above video chunk list) (action 2b). The video player 61 transmits http get requests for video chunks that correspond to the entries in the manifest file as the video is played (action 3a). Requests for a non-overloaded URL are forwarded to the video server (e.g. for video chunks 0, 1, 2, 4, 5, 6) (action 3d). Thus, the request for the video chunk that is overloaded is first sent to the play time tracker (e.g. for video chunk3) (action 3a), the play time tracker extracts the play time information and the request is then forwarded to the video server (action 3d). All requested video chunks are served by the video server either from the cache if it is in cache (action 3e) or from the video file storage (action 3f) if it is not in cache and transmits it to the video player (action 3g). The play time information extracted by play time tracker (e.g. concerning video chunk3) consists of a time value and a video chunk identifier (in this case identifying video chunk6). The time value indicates remaining time before the player will request the video chunk that is identified by the embedded video chunk identifier. The play time tracker checks if the targeted video chunk is present in cache 53 (action 3b). If it is in cache, no action is taken. If it is not in cache, the play time tracker transfers a request to the scheduler (action 3c) to compute the targeted video chunk urgently. The request transmitted to the scheduler comprises the video chunk identifier (e.g. the video chunk URL) and the above discussed time value. Receiving the request from the play time tracker, the scheduler decides what to do, based on the expected play out time (e.g. 20s for video chunk6): if a job for computing of the urgently requested video chunk is being processed by a reliable instance and it is expected that the job will finish in expected play out time, or if a job for computing the video chunk is in urgent queue Q2 or in optional queue Q4, no action is required. If a job for computing the video chunk is in the best effort queue Q1 or in normal queue Q3, it might be necessary to move the job to the urgent queue Q4. Thus, depending on the expected play out time, the scheduler may change a job's queue attribution. According to a preferred embodiment, the scheduler does not change queue attribution of a job, but creates a copy job that it posts to the urgent queue; and before starting the execution of a job from a queue on an instance the corresponding instance verifies if the related targeted video chunk is already in cache. If it is, there is no need to execute the job, the job is removed from the queue and the instance fetches the next job from the queue. This preferred embodiment has the advantage that it does not require removal of jobs from the queues at other moments than when they are fetched for processing by an instance, which simplifies queue management. According to a variant embodiment, the scheduler regularly verifies if the jobs in the queues are expected to finish in their associated expected play out time, and autonomously takes actions to improve the probability that they will, e.g. by posting copy jobs to the urgent queue if needed. The scheduler can also verify if a job that is being executed by an instance evolves too slowly to be expected to be finished in expected play out time, and then create a copy job and post it to the urgent queue. Additional verification if a job is expected to finish in expected play out time is done when a request from the play time tracker is received, for the video chunk that is specified in the request.

According to an alternative embodiment, the URLs in the manifest file are signed to offer improved security.

According to an alternative embodiment, two queues are used, a first one being served by a pool of spot instances, the second queue by on-demand instances for computing video chunks in emergency. The first queue is configured to have the computation result a predetermined time period before play out (e.g., 20s). The second queue is configured to have a computation result within lesser than the predetermined time period (e.g., within 20s, 10s, or 5s).

According to an alternative embodiment, an URL is overloaded in the manifest file regularly, for example every 6 video chunks if the typical duration of a video chunk is 10s. The frequency for overloading the URLs is a kind of compromise: if too high, the play-time-tracker will require a lot of CPU time (e.g. running on several EC2 instances to support the load). When too low, the risk to miss a trick mode action that would result in a missed targeted video chunk is high. Ultimately, the CPU load for the play time tracker means a computing cost. Several variants are possible:
(i) a fixed URL overloading frequency is used, that is a compromise between computing cost and reactivity: overload an URL in the manifest file every n URLs. The value n will depend on the average video chunk duration.
(ii) URL overloading is only done when a targeted video chunk is expected to be needed within a predetermined play out time or play out delay, for example within 100s or 200s.
(iii) as (ii), but for several URLs in the manifest file.
(iv) URL overloading is done for several targeted video chunks in a same overloaded URL, and specifies a time value for every targeted video chunk in the overloaded URL.

The above described variants can be combined to form a particularly advantageous variant embodiment.

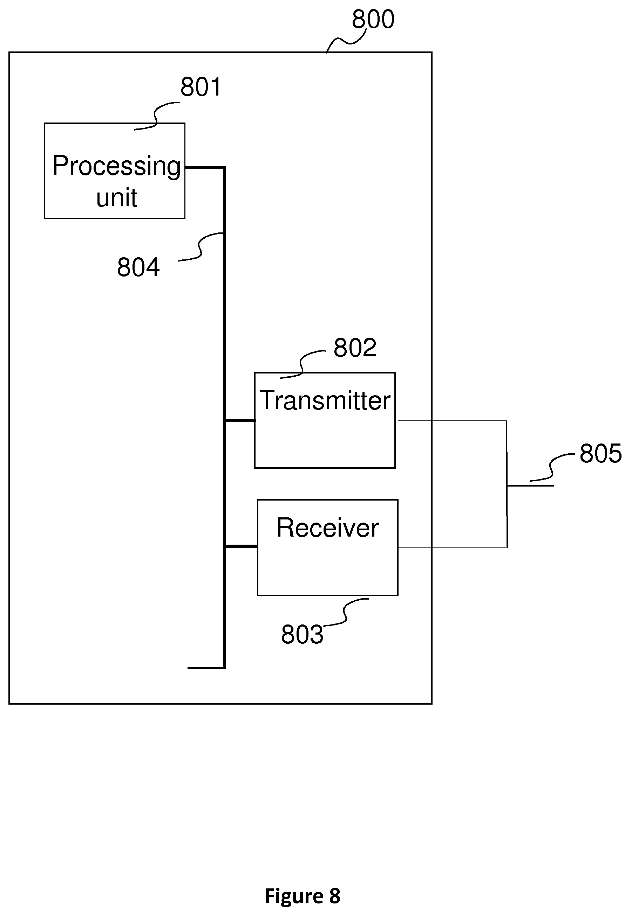

According to a further embodiment, URL overloading periodicity is adapted depending on the play speed chosen by the video player to which the manifest file is destined. For example, if the play speed chosen is fast forward 16x, the periodicity of the URL overloading is 16 times more frequent than if the play speed is that of normal play (1x). Though it may be considered a waste of resources to provide targetable video chunks in content that is viewed in faster than normal play speed due to the shortened display time, this variant advantageously allows to be prepared for providing targeted video chunks when the video player switches back to normal play speed. In this figure, the connections between devices are depicted as logical connections, but the skilled in the art will readily understand that all devices can be connected to one or more networks, such as a network 805 of figure 8, over which the logical connections that are depicted can take place.

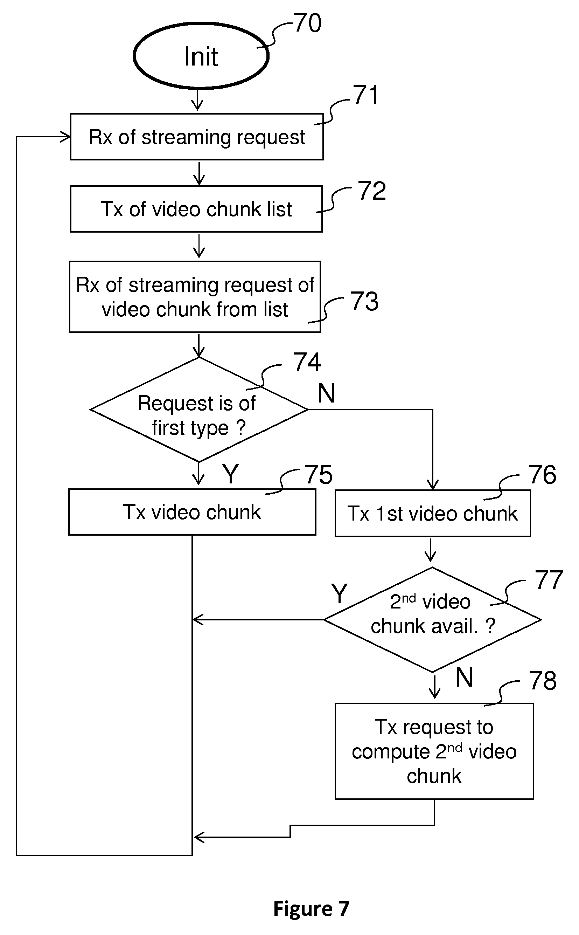

**Figure 7** is a flow chart according to a particular embodiment of the present invention. In a step 70, variables and parameters are initialized that are used for the method. In a step 71, a streaming request for streaming of a video is received from a video player. In a step 72, a video chunk list is transmitted to the video player, comprising resource locators of video chunks of the requested video. In a step 73, a request is received from the video player for streaming of a video chunk from the video chunk list. In a step 74, it is determined if the resource locator comprised in said request for streaming of a video chunk is of the first type. If the resource locator is of the first type, the video chunk referred to in the resource locator is transmitted to the video player in a step 75, and the process continues with step 71. If the resource locator is of the second type, the first video chunk referred to in the resource locator is transmitted to the video player in a step 76, and it is determined in step 77 if the second video chunk referred to in the resource locator is available (for example, in storage e.g. in a cache area). If the second video chunk is available, the process continues with step 71. If the second video chunk is not available, in a step 78 a request for computing of the second video chunk referred to in the resource locator is transmitted to a scheduler for computing targeted video chunks, the request comprising the reference to the second video chunk and the expected play out time or delay, and the process continues with step 71.

**Figure 8** is an example device 800 suitable for implementing the method of the present disclosure. The device 800 implements for example the play time tracker 62 of figure 6. The device comprises a processing unit 801, a transmitter interface 802, a receiver interface 803, that are interconnected by means of an internal data- and communication bus 804. The receiver interface and the transmitter interface are connected to a network 805 that allows the device to communicate with other devices such as a video player, a scheduler, a cache memory, and a video server. Receiver 803 receives a request for streaming of a video from a video player. Transmitter 802 transmits, in response to the request, a video chunk list comprising resource locators of video chunks of the requested video to the video player, the list comprising at least two types of resource locators, a first type comprising a single resource locator referring to a first video chunk and a second type comprising, in addition to a resource locator referring to a first video chunk, a resource locator referring to a second video chunk and an expected play out time or delay of the second video chunk. The receiver then receives a request for streaming of a video chunk from the video chunk list from the video player. The processing unit 801 determines if the resource locator comprised in the request for streaming of a video chunk is of the first type. If the processing unit has determined that the resource locator comprised in the request for streaming of a video chunk is of the first type, the transmitter transmits the first video chunk referred to in the single resource locator to the video player. If the processing unit has determined that the resource locator comprised in the request is of the second type, the transmitter transmits the first video chunk referred to in the multiple resource locator to the video player, and the processing unit determines if the second video chunk referred to in the multiple resource locator is available. If the processing unit determined that the second video chunk is not available, the transmitter transmitting a request for computing of the second video chunk, the request for computing of the second video chunk comprising the reference to the second video chunk and the expected play out time or delay.

Other device architectures than illustrated in figure 8 are possible and compatible with the present disclosure. As will be appreciated by those skilled in the art, aspects of the present principles can be embodied as a system, method or computer readable medium. Accordingly, aspects of the present principles can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized.

Thus, for example, it will be appreciated by those skilled in the art that the block diagrams presented herein represent conceptual views of illustrative system components and/or circuitry embodying the principles of the invention. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

## Claims

1. A method of video streaming to a video player device (61), wherein the method comprises:
receiving (71), from said video player device, a request for streaming of a video to said video player device;
in response to said request for streaming of a video, transmitting (72) to said video player device a video chunk list comprising resource locators of video chunks for playing the video, said video chunk list comprising a resource locator of a first resource locator type and a resource locator of a second resource locator type, said first resource locator type referring to a single video chunk and said second resource locator type comprising: a first resource locator referring to a first video chunk, a second resource locator referring to a second video chunk and an expected play out delay of said second video chunk;
receiving (73), from said video player device, a request for streaming a video chunk from said video chunk list;
if a resource locator comprised in said request for streaming a video chunk is of the first resource locator type, transmitting (75) said single video chunk to said video player device;
if said resource locator comprised in said request for streaming a video chunk is of the second resource locator type, transmitting (76) to said video player device said first video chunk, and if said second video chunk is not available, transmitting (78) a request for computing said second video chunk, said request for computing the second video chunk comprising said expected play out delay.

2. The method according to claim 1, wherein said request for computing said second video chunk is transmitted to a scheduler (50) for scheduling a computing of video chunks, said scheduler comprising a plurality of job queues (51) for computing video chunks, each job queue of the plurality of job queues being served by a computing instance (52) of a particular category, each computing instance storing computed video chunks into cache memory (54), and said scheduler attributing jobs for computing video chunks to a queue of a particular category selected according to said associated expected play out delay.

3. The method according to claim 2, wherein, upon reception of said request for computing, said scheduler verifies if a job corresponding to said reference to said second video chunk is expected to return a computed result within said expected play out delay, and if not, inserting a copy job of said job corresponding to said reference to said second video chunk in a queue of category urgent.

4. The method according to claim 2, wherein, upon reception of said request for computing, said scheduler verifies if a job corresponding to said reference to said second video chunk is expected to return a computed result within said expected play out delay, and if not, moving of said job corresponding to said reference to said second video chunk in a queue of category urgent.

5. The method according to any one of claims 2 to 4, wherein the method further comprises adding or removing of computing instances serving each job queue as a function of job queue size.

6. The method according to any one of claims 2 to 5, wherein a job queue category comprises at least a best effort queue and an urgent queue.

7. The method according to any preceding claim, wherein said computing comprises overlaying of a pixel zone in image frames of a video chunk with content that is targeted to a user of the video player device.

8. A device (800, 62), wherein said device comprises:
a processor (801);
a transmitter (802);
a receiver (803);
said receiver being configured to receive, from a video player device, a request for streaming of a video to said video player device;
said transmitter being configured to transmit, to said video player device, in response to said request for streaming of a video, a video chunk list comprising resource locators of video chunks of the requested video, said video chunk list comprising a resource locator of a first resource locator type and a resource locator of a second resource locator type, said first resource locator type referring to a single video chunk and said second resource locator type comprising: a first resource locator referring to a first video chunk, a second resource locator referring to a second video chunk and an expected play out delay of said second video chunk;
said receiver being further configured to receive, from said video player device, a request for streaming of a video chunk from said video chunk list;
said processor being configured to determine if a resource locator comprised in said request for streaming a video chunk is of the first resource locator type, and said transmitter being further configured to transmit, to said video player device, said single video chunk if said resource locator comprised in said request for streaming a video chunk is of the first resource locator type;
said processor being further configured to determine if a resource locator comprised in said request for streaming a video chunk is of the second resource locator type, and said transmitter being further configured to transmit said first video chunk to said video player device if said resource locator comprised in said request for streaming a video chunk is of the second resource locator type, and said processor being further configured to determine if said second video chunk is not available, and said transmitter being further configured to transmit, if said second video chunk is not available, a request for computing of said second video chunk, said request for computing of the second video chunk comprising said reference to said second video chunk and said expected play out delay.

9. A system comprising a device (800, 61) according to claim 8, a scheduler (50) configured to schedule a computing of video chunks on computing instances (52) and a cache memory (53) configured to store computed video chunks, wherein said transmitter of said device is further configured to transmit said request for computing said second video chunk to said scheduler, said scheduler using a memory for storing a plurality of job queues (51) for computing video chunks, each job queue of the plurality of job queues being served by a computing instance of a particular category, each computing instance storing computed video chunks available into said cache memory, and said scheduler attributing jobs for computing video chunks to a queue of a particular category selected according to said associated expected play out delay.

10. The system according to claim 9, wherein said scheduler is further configured to verify, upon reception of said request for computing, if a job corresponding to said reference to said second video chunk is expected to return a computed result within said expected play out delay, and if not, to insert a copy job of said job corresponding to said reference to said second video chunk in a queue of category urgent.

11. The system according to claim 9, wherein said scheduler is further configured to verify, upon reception of said request for computing, if a job corresponding to said reference to said second video chunk is expected to return a computed result within said expected play out delay, and if not, to move said job corresponding to said reference to said second video chunk in a queue of category urgent.

12. The system according to any one of claims 9 to 11, wherein said scheduler is further configured to add or to remove computing instances serving each job queue as a function of job queue size.

13. A computer program product downloadable from a communication network and/or recorded on a medium readable by computer and/or executable by a processor, comprising program code instructions for implementing the steps of the method according to any of claims 1 to 7.

14. A non-transitory computer-readable medium comprising a computer program product recorded thereon and capable of being run by a processor, including program code instructions for implementing the steps of the method according to any of claims 1 to 7.

## Patentansprüche

1. Verfahren für das Videostreaming zu einer Videoabspielvorrichtung (61), wobei das Verfahren umfasst:
Empfangen (71) einer Anforderung zum Streamen eines Videos zu der Videoabspielvorrichtung von der Videoabspielvorrichtung;
Senden (72) einer Videosegmentliste, die Quellenlokalisierer von Videosegmenten zum Abspielen des Videos umfasst, zu der Videoabspielvorrichtung in Ansprechen auf die Anforderung zum Streamen eines Videos, wobei die Videosegmentliste einen Quellenlokalisierer eines ersten Quellenlokalisierertyps und einen Quellenlokalisierer eines zweiten Quellenlokalisierertyps umfasst, wobei sich der erste Quellenlokalisierertyp auf ein einzelnes Videosegment bezieht und wobei der zweite Quellenlokalisierer Folgendes umfasst: einen ersten Quellenlokalisierer, der sich auf ein erstes Videosegment bezieht, einen zweiten Quellenlokalisierer, der sich auf ein zweites Videosegment bezieht, und eine erwartete Abspielverzögerung des zweiten Videosegments;
Empfangen (73) einer Anforderung zum Streamen eines Videosegments von der Videosegmentliste von der Videoabspielvorrichtung;
Senden (75) des einzelnen Videosegments zu der Videoabspielvorrichtung, falls ein in der Anforderung zum Streamen eines Videosegments enthaltener Quellenlokalisierer von dem ersten Quellenlokalisierertyp ist;
Senden (76) des ersten Videosegments zu der Videoabspielvorrichtung, falls der in der Anforderung zum Streamen eines Videosegments enthaltene Quellenlokalisierer von dem zweiten Quellenlokalisierertyp ist, und Senden (78) einer Anforderung zum Berechnen des zweiten Videosegments, falls das zweite Videosegment nicht verfügbar ist, wobei die Anforderung zum Berechnen des zweiten Videosegments die erwartete Abspielverzögerung umfasst.

2. Verfahren nach Anspruch 1, wobei die Anforderung zum Berechnen des zweiten Videosegments an einen Planer (50) gesendet wird, um eine Berechnung der Videosegmente zu planen, wobei der Planer mehrere Auftragswarteschlangen (51) zum Berechnen von Videosegmenten umfasst, wobei jede Auftragswarteschlange der mehreren Auftragswarteschlangen durch eine Recheninstanz (52) einer bestimmte Kategorie bedient wird, wobei jede Recheninstanz berechnete Videosegmente in einem Cache-Speicher (54) speichert und wobei der Planer Aufträge zum Berechnen von Videosegmenten einer Warteschlange einer bestimmten Kategorie zuordnet, die in Übereinstimmung mit der zugeordneten erwarteten Abspielverzögerung ausgewählt wird.

3. Verfahren nach Anspruch 2, wobei der Planer beim Empfang der Anforderung zum Berechnen überprüft, ob zu erwarten ist, dass ein Auftrag, der der Bezugnahme auf das zweite Videosegment entspricht, innerhalb der erwarteten Abspielverzögerung ein Rechenergebnis zurückgibt, und einen Kopieauftrag des Auftrags, der der Bezugnahme auf das zweite Videosegment entspricht, in eine Warteschlange der Kategorie dringend einfügt, wenn das nicht der Fall ist.

4. Verfahren nach Anspruch 2, wobei der Planer beim Empfang der Anforderung zum Berechnen überprüft, ob zu erwarten ist, dass ein Auftrag, der der Bezugnahme auf das zweite Videosegment entspricht, innerhalb der erwarteten Abspielverzögerung ein Rechenergebnis zurückgibt, und den Auftrag, der der Bezugnahme auf das zweite Videosegment entspricht, in eine Warteschlange der Kategorie dringend verschiebt, wenn das nicht der Fall ist.

5. Verfahren nach einem der Ansprüche 2 bis 4, wobei das Verfahren ferner das Hinzufügen oder Entfernen von Recheninstanzen, die jede Auftragswarteschlange bedienen, als eine Funktion der Größe der Auftragswarteschlange umfasst.

6. Verfahren nach einem der Ansprüche 2 bis 5, wobei eine Auftragswarteschlangenkategorie eine Warteschlange des besten Bemühens und eine dringliche Warteschlange umfasst.

7. Verfahren nach einem vorhergehenden Anspruch, wobei das Berechnen das Übereinanderlegen einer Pixelzone in Bildfeldern eines Videosegments mit Inhalt, der an einen Nutzer der Videoabspielvorrichtung gerichtet ist, umfasst.

8. Vorrichtung (800, 62), wobei die Vorrichtung umfasst:
einen Prozessor (801);
einen Sender (802);
einen Empfänger (803);
wobei der Empfänger dafür konfiguriert ist, von einer Videoabspielvorrichtung eine Anforderung zum Streamen eines Videos zu der Videoabspielvorrichtung zu empfangen;
wobei der Sender dafür konfiguriert ist, in Ansprechen auf die Anforderung zum Streamen eines Videos eine Videosegmentliste, die Quellenlokalisierer von Videosegmenten des angeforderten Videos umfasst, zu der Videoabspielvorrichtung zu senden, wobei die Videosegmentliste einen Quellenlokalisierer eines ersten Quellenlokalisierertyps und einen Quellenlokalisierer eines zweiten Quellenlokalisierertyps umfasst, wobei sich der erste Quellenlokalisierertyp auf ein einzelnes Videosegment bezieht und der zweite
Quellenlokalisierertyp umfasst: einen ersten Quellenlokalisierer, der sich auf ein erstes Videosegment bezieht, einen zweiten Quellenlokalisierer, der sich auf ein zweites Videosegment bezieht, und eine erwartete Abspielverzögerung des zweiten Videosegments;
wobei der Empfänger ferner dafür konfiguriert ist, von der Videoabspielvorrichtung eine Anforderung zum Streamen eines Videosegments aus der Videosegmentliste zu empfangen;
wobei der Prozessor dafür konfiguriert ist zu bestimmen, ob ein in der Anforderung zum Streamen eines Videosegments enthaltener Quellenlokalisierer von dem ersten Quellenlokalisierertyp ist, und wobei der Sender ferner dafür konfiguriert ist, das einzelne Videosegment zu der Videoabspielvorrichtung zu senden, falls der in der Anforderung zum Streamen eines Videosegments enthaltene Quellenlokalisierer von dem ersten Quellenlokalisierertyp ist;
wobei der Prozessor ferner dafür konfiguriert ist zu bestimmen, ob ein in der Anforderung zum Streamen eines Videosegments enthaltener Quellenlokalisierer von dem zweiten Quellenlokalisierertyp ist, und wobei der Sender dafür konfiguriert ist, das erste Videosegment zu der Videoabspielvorrichtung zu senden, falls der in der Anforderung zum Streamen eines Videosegments enthaltene Quellenlokalisierer von dem zweiten Quellenlokalisierertyp ist, und wobei der Prozessor ferner dafür konfiguriert ist zu bestimmen, ob das zweite Videosegment nicht verfügbar ist, und wobei der Sender ferner dafür konfiguriert ist, eine Anforderung zum Berechnen des zweiten Videosegments zu senden, falls das zweite Videosegment nicht verfügbar ist, wobei die Anforderung zum Berechnen des zweiten Videosegments die Bezugnahme auf das zweite Videosegment und auf die erwartete Abspielverzögerung umfasst.

9. System, das eine Vorrichtung (800, 61) nach Anspruch 8, einen Planer (50), der dafür konfiguriert ist, ein Berechnen von Videosegmenten an Recheninstanzen (52) zu planen, und einen Cache-Speicher (53), der dafür konfiguriert ist, berechnete Videosegmente zu speichern, umfasst, wobei der Sender der Vorrichtung ferner dafür konfiguriert ist, die Anforderung zum Berechnen des zweiten Videosegments an den Planer zu senden, wobei der Planer einen Speicher zum Speichern mehrerer Auftragswarteschlangen (51) zum Berechnen von Videosegmenten verwendet, wobei jede Auftragswarteschlange der mehreren Auftragswarteschlangen durch eine Recheninstanz einer bestimmten Kategorie bedient wird, wobei jede Recheninstanz berechnete Videosegmente speichert, die in dem Cache-Speicher verfügbar sind, und wobei der Planer Aufträge zum Berechnen von Videosegmenten einer Warteschlange einer bestimmten Kategorie zuweist, die in Übereinstimmung mit der zugeordneten erwarteten Abspielverzögerung ausgewählt wird.

10. System nach Anspruch 9, wobei der Planer ferner dafür konfiguriert ist, beim Empfang der Anforderung zum Berechnen zu überprüfen, ob zu erwarten ist, dass ein Auftrag, der der Bezugnahme auf das zweite Videosegment entspricht, innerhalb der erwarteten Abspielverzögerung ein Rechenergebnis zurückgibt, und einen Kopieauftrag des Auftrags, der der Bezugnahme auf das zweite Videosegment entspricht, in eine Warteschlange der Kategorie dringend einfügt, wenn das nicht der Fall ist.

11. System nach Anspruch 9, wobei der Planer ferner dafür konfiguriert ist, beim Empfang der Anforderung zum Berechnen zu überprüfen, ob zu erwarten ist, dass ein Auftrag, der der Bezugnahme auf das zweite Videosegment entspricht, innerhalb der erwarteten Abspielverzögerung ein Rechenergebnis zurückgibt, und den Auftrag, der der Bezugnahme auf das zweite Videosegment entspricht, in eine Warteschlange der Kategorie dringend verschiebt, wenn das nicht der Fall ist.

12. System nach einem der Ansprüche 9 bis 11, wobei der Planer ferner dafür konfiguriert ist, Recheninstanzen, die jeder Auftragswarteschlange dienen, als eine Funktion der Größe der Auftragswarteschlange hinzuzufügen oder zu entfernen.

13. Computerprogrammprodukt, das von einem Kommunikationsnetz heruntergeladen werden kann und/oder das auf einem computerlesbaren Medium aufgezeichnet ist und/oder das durch einen Prozessor ausgeführt werden kann, wobei das Computerprogrammprodukt Programmcodeanweisungen zum Implementieren der Schritte des Verfahrens nach einem der Ansprüche 1 bis 7 umfasst.

14. Nicht temporäres computerlesbares Medium, das ein Computerprogrammprodukt umfasst, das darauf aufgezeichnet ist und das durch einen Prozessor ausgeführt werden kann, wobei das Medium Programmcodeanweisungen zum Implementieren der Schritte des Verfahrens nach einem der Ansprüche 1 bis 7 enthält.

## Revendications

1. Procédé de diffusion vidéo en temps réel sur un lecteur vidéo (61), ledit procédé comprenant :
la réception (71), par ledit lecteur vidéo, d'une demande de diffusion en temps réel d'une vidéo sur ledit lecteur vidéo ;
en réponse à ladite demande de diffusion en temps réel d'une vidéo, la transmission (72) vers ledit lecteur vidéo d'une liste de blocs vidéo comprenant des localisateurs de ressources des blocs vidéo pour la lecture de la vidéo, ladite liste de blocs vidéo comprenant un localisateur de ressource d'un premier type de localisateur de ressource et un localisateur de ressource d'un deuxième type de localisateur de ressource, ledit premier type de localisateur de ressource se référant à un bloc vidéo unique et ledit deuxième type de localisateur de ressource comprenant : un premier localisateur de ressource se référant à un premier bloc vidéo, un deuxième localisateur de ressource se référant à un deuxième bloc vidéo et un délai de lecture attendu dudit deuxième bloc vidéo ;
la réception (73), par ledit lecteur vidéo, d'une demande de diffusion en temps réel d'un bloc vidéo depuis ladite liste de blocs vidéo ;
si un localisateur de ressource compris dans ladite demande de diffusion en temps réel d'un bloc vidéo est du deuxième type de localisateur de ressource, la transmission (75) dudit bloc vidéo unique vers ledit lecteur vidéo ;
si ledit localisateur de ressource compris dans ladite demande de diffusion en temps réel d'un bloc vidéo est du deuxième type de localisateur de ressource, la transmission (76) vers ledit lecteur vidéo dudit premier bloc vidéo, et si ledit deuxième bloc vidéo n'est pas disponible, la transmission (78) d'une demande dudit deuxième bloc vidéo, ladite demande de calcul dudit deuxième bloc vidéo comprenant ledit délai de lecture attendu.

2. Procédé selon la revendication 11, dans lequel ladite demande de calcul dudit deuxième bloc vidéo est transmise à un programmateur (50) pour programmer le calcul de blocs vidéo, ledit programmateur comprenant une pluralité de files d'attente de tâches (51) pour le calcul des blocs vidéo, chaque file d'attente de tâches de la pluralité de files d'attente de tâches étant servie par une instance de calcul (52) d'une catégorie particulière, chaque instance de calcul stockant les blocs vidéo calculés dans une mémoire cache (54), et ledit programmateur attribuant les tâches de calcul des blocs vidéo à une file d'attente d'une catégorie particulière sélectionnée selon ledit délai de lecture attendu associé.

3. Procédé selon la revendication 2, dans lequel, après réception de ladite demande de calcul, ledit programmateur vérifie si une tâche correspondant à ladite référence audit deuxième bloc vidéo doit renvoyer un résultat calculé dans lequel ledit délai de lecture attendu, et si non, insère une tâche de copie de ladite tâche correspondant à ladite référence audit deuxième bloc vidéo dans une file d'attente de catégorie urgente.

4. Procédé selon la revendication 2, dans lequel, après réception de ladite demande de calcul, ledit programmateur vérifie si une tâche correspondant à ladite référence audit deuxième bloc vidéo doit renvoyer un résultat calculé dans ledit délai de lecture attendu, et si non, déplace ladite tâche correspondant à ladite référence audit deuxième bloc vidéo dans une file d'attente de catégorie urgente.

5. Procédé selon l'une des revendications 2 à 4, ledit procédé comprenant en outre l'ajout ou la suppression d'instances de calcul servant chaque file d'attente de tâches comme une fonction de la taille de la file d'attente.

6. Procédé selon l'une des revendications 2 à 5, dans lequel une catégorie de file d'attente de tâches comprend au moins une file d'attente d'effort optimal et une file d'attente urgente.

7. Procédé selon l'une des revendications précédentes, dans lequel ledit calcul comprend la superposition d'une zone de pixels sur des cadres d'image d'un bloc vidéo avec du contenu ciblant un utilisateur du lecteur vidéo.

8. Dispositif (800, 62), ledit dispositif comprenant :
un processeur (801) ;
un émetteur (802) ;
un récepteur (803) ;
ledit récepteur étant configuré pour recevoir, depuis un lecteur vidéo, une demande de diffusion en temps réel d'une vidéo sur ledit lecteur vidéo ;
ledit émetteur étant configuré pour transmettre, vers ledit lecteur vidéo, en réponse à ladite demande de diffusion en temps réel d'une vidéo, une liste de blocs vidéo comprenant des localisateurs de ressources des blocs vidéo de la vidéo demandée, ladite liste de blocs vidéo comprenant un localisateur de ressource d'un premier type de localisateur de ressource et un localisateur de ressource d'un deuxième type de localisateur de ressource, ledit premier type de localisateur de ressource se référant à un bloc vidéo unique et ledit deuxième type de localisateur de ressource comprenant : un premier localisateur de ressource se référant à un premier bloc vidéo, un deuxième localisateur de ressource se référant à un deuxième bloc vidéo et un délai de lecture attendu dudit deuxième bloc vidéo ;
ledit récepteur étant en outre configuré pour recevoir, depuis ledit lecteur vidéo, une demande de diffusion en temps réel d'un bloc vidéo à partir de ladite liste de blocs vidéo ;
ledit processeur étant configuré pour déterminer si un localisateur de ressource compris dans ladite demande de diffusion en temps réel d'un bloc vidéo est d'un premier type de localisateur de ressource, et ledit émetteur étant en outre configuré pour transmettre, audit lecteur vidéo, ledit bloc vidéo unique si ledit localisateur de ressource compris dans ladite demande de diffusion en temps réel d'un bloc vidéo est du premier type de localisateur de ressource ;
ledit processeur étant en outre configuré pour déterminer si un localisateur de ressource compris dans ladite demande de diffusion en temps réel d'un bloc vidéo est du deuxième type de localisateur de ressource, et ledit émetteur étant en outre configuré pour transmettre ledit premier bloc vidéo audit lecteur vidéo si ledit localisateur de ressource compris dans ladite demande de diffusion en temps réel d'un bloc vidéo est du deuxième type de localisateur de ressource, et ledit processeur étant en outre configuré pour déterminer si ledit deuxième bloc vidéo n'est pas disponible, et ledit émetteur étant en outre configuré pour transmettre, si ledit deuxième bloc vidéo n'est pas disponible, une demande de calcul dudit deuxième bloc vidéo, ladite demande de calcul dudit deuxième bloc vidéo comprenant ladite référence audit deuxième bloc vidéo et audit délai de lecture attendu.

9. Système comprenant un dispositif (800, 61 ) selon la revendication 8, un programmateur (50) configuré pour programmer le calcul de blocs vidéo sur des instances de calcul (52) et une mémoire cache (53) configurée pour stocker des blocs vidéo calculés, dans lequel ledit émetteur dudit dispositif est en outre configuré pour transmettre ladite demande de calcul dudit deuxième bloc vidéo audit programmateur, ledit programmateur utilisant une mémoire pour stocker une pluralité de files d'attente de tâches (51) pour calculer des blocs vidéo, chaque file d'attente de tâches de la pluralité de files d'attente de tâches étant servie par une instance de calcul d'une catégorie particulière, chaque instance de calcul stockant les blocs vidéo calculés disponibles dans ladite mémoire cache, et ledit programmateur attribuant les tâches de calcul des blocs vidéo à une file d'attendre d'une catégorie particulière sélectionnée selon ledit délai de lecture attendu associé.

10. Système selon la revendication 9, dans lequel, ledit programmateur est en outre configuré pour vérifier, après réception de ladite demande de calcul, si une tâche correspondant à ladite référence audit deuxième bloc vidéo doit renvoyer un résultat calculé dans ledit délai de lecture attendu, et si non, pour insérer une tâche de copie de ladite tâche correspondant à ladite référence audit deuxième bloc vidéo dans une file d'attente de catégorie urgente.

11. Système selon la revendication 9, dans lequel ledit programmateur est en outre configuré pour vérifier, après réception de ladite demande de calcul, si une tâche correspondant à ladite référence audit deuxième bloc vidéo doit renvoyer un résultat calculé dans ledit délai de lecture attendu, et si non, pour déplacer ladite tâche correspondant à ladite référence audit deuxième bloc vidéo dans une file d'attente de catégorie urgente.

12. Système selon l'une des revendications 9 à 11, ledit système étant en outre configuré pour ajouter ou supprimer des instances de calcul servant chaque file d'attente de tâches comme une fonction de la taille de la file d'attente.

13. Programme informatique téléchargeable à partir d'un réseau de communication et/ou enregistré sur un support lisible par un ordinateur et/ou exécutable par un processeur, comprenant des instructions de code de programme pour la mise en oeuvre des étapes du procédé selon l'une des revendications 1 à 7.

14. Support non transitoire lisible sur ordinateur comprenant un programme informatique enregistré et exécutable par un processeur, comprenant des instructions de code de programme pour la mise en oeuvre des étapes du procédé selon l'une des revendications 1 à 7.
